# EUROPEAN PATENT SPECIFICATION

(11) **EP 2 642 777 B1**
(45) Date of publication and mention of the grant of the patent: **11.03.2015**
(21) Application number: 12001953.4
(22) Date of filing: 20.03.2012
(51) Int. Cl.: H04W 8/24

(54) **Methods and devices for OTA management of mobile stations**
Verfahren und Vorrichtungen für OTA-Management von Mobilstationen
Procédés et dispositifs de gestion OTA de stations mobiles

(43) Date of publication of application: 25.09.2013
(73) Proprietor: Giesecke & Devrient GmbH, 81677 München (DE)
(72) Inventor: Östling, Leif, 16853 Bromma (SE)

(56) References cited:
- EP-A1- 1 492 364
- EP-A1- 1 763 266
- WO-A2-2009/103623
- US-A1- 2007 070 935
- MICHAEL WALKER: "Embedded SIMsand M2M Communications", INTERNET CITATION, 20 January 2011 (2011-01-20), pages 1-10, XP002673376, Retrieved from the Internet: URL:http://docbox.etsi.org/workshop/2011/2 01101_securityworkshop/s4_mobiile_wireless _security/walker_embeddedsims.pdf [retrieved on 2012-04-02]

## Description

### Field of the Invention

The invention relates to mobile communications in general and in particular to methods and devices for over-the-air (OTA) management of mobile stations containing a secure element, such as a subscriber identity module (SIM) or a universal integrated circuit card (UICC), in a mobile communications system.

### Background of the Invention

Communicating by means of a mobile phone or mobile station via a public land mobile network (PLMN; also referred to as a cellular network herein) operated by a mobile network operator (MNO) generally requires the mobile station to be equipped with a secure element for securely storing data uniquely identifying the user of the mobile station (also called subscriber or mobile user). For instance, in a mobile station configured to communicate according to the Global System for Mobile Communications (GSM), currently the world's most popular standard for mobile communications systems, the secure element is called a subscriber identity module (SIM) and is usually provided in the form of a smart card. According to the GSM standard, the technical features of which are defined by a large number of interrelated and mutually dependent specifications published by the ETSI standardization organization, the SIM contains cellular network subscription data for authenticating and identifying the user of the mobile station, including in particular an International Mobile Security Identity (IMSI) and an authentication key Ki. This cellular network specific information is generally being stored on the SIM by the SIM manufacturer or the MNO during a SIM personalization process prior to providing the user of the mobile station with his SIM. A non-personalized SIM is generally not suited for use in a mobile station, i.e. the use of the services provided by a PLNM with a non-personalized SIM is not possible.

According to the GSM standard the IMSI number allows the MNO to identify a mobile user and to provide him with exactly those services the mobile user has subscribed to. The authentication key Ki is a 128-bit data element for authenticating the SIM contained in the mobile station with respect to the PLMN. The authentication key Ki is being paired with an IMSI number generally during the SIM personalization process. For security reasons the authentication key Ki is stored only on the SIM and on a database of the PLMN called authentication center (AUC).

It is known to manage secure elements, such as SIMs, over-the-air (OTA) using standardized protocols carried over SMS (short message service) or IP (Internet protocol) communication channels using an already established connection in a cellular communications network. WO 2010/093312, for instance, describes a method for OTA activation and management of a SIM using an ODA (On Demand Activation) application adapted to activate and manage a SIM after it has been authenticated by the cellular communications network.

One particular field of application of secure elements, such as SIMs, which is expected to grow rapidly within the next couple of years is M2M (machine-to-machine), i.e. the communication between machines over a cellular communications network without human intervention, also called the Internet of things. In M2M data is automatically transmitted between many different types of machines equipped with a secure element, such as TV systems, set top boxes, vending machines, vehicles, electronic books, automatic cameras, sensor devices, and the like. It is foreseeable that at least for some of these devices it will not be possible or at least very difficult to provide the secure element beforehand with a complete set of cellular network subscription data, for instance an IMSI number. This is because in some M2M applications the secure element will be implemented in the form of an embedded or surface mounted device, which is build into a respective machine during the manufacturing process thereof without the possibility of providing the secure element with a complete set of cellular network subscription data beforehand. Consequently, once in the field, these machines and their non-personalized secure elements require the provision of cellular network subscription data over-the-air.

Thus, the problem addressed by the present invention is to provide for methods and devices that allow providing a mobile station including a secure element over-the-air with cellular network subscription data without the mobile station having an active subscription, i.e. before the mobile station can successfully attach to a cellular communications network.

European patent application EP 1 492 364 A1 discloses a method and registration server for over-the-air activation of an additional radio interface provided in a multimode radio user terminal.

### Summary of the Invention

The above object is achieved according to the present invention by the subject-matter of the independent claims. Preferred embodiments of the invention are defined in the dependent claims.

Generally, the present invention is based on the idea to provide a mobile station with cellular network subscription data for accessing a cellular communications network from an administration unit over-the-air (OTA) via a wireless local area network (WLAN) to which the mobile station can attach. To this end, the mobile station is equipped with a WLAN module that is configured to establish a communication link with the administration unit via the WLAN it can attach to.

The term "cellular network subscription data" used herein is to be construed in a broad sense in that the cellular network subscription data uploaded from the administration unit, preferably an administration server operated by the operator of the cellular communications network the mobile station wants to attach to, can include cellular network subscription data, such as an IMSI number and/ or a corresponding authentication key Ki, or alternatively a pointer to a specific set of cellular network subscription data from a list of cellular network subscription data pre-stored, preferably in the secure element of the mobile station.

More specifically, according to a first aspect the invention is directed to a method for providing cellular network subscription data from an administration unit, preferably an administration server, to a mobile station that includes a secure element, such as a SIM or a UICC, and is configured to communicate via a cellular communications network. The method comprises the following steps in the mobile station: attaching to a WLAN by means of a WLAN module implemented in the mobile station; establishing a communication link between the mobile station and the administration unit via the WLAN the mobile station has attached to; and downloading cellular network subscription data from the administration unit via the WLAN to the mobile station and storing the same within the secure element of the mobile station such that by means of the cellular network subscription data the mobile station can attach to a corresponding cellular communications network.

According to a second aspect the invention is directed to a method for providing cellular network subscription data from an administration unit, preferably an administration server, to a mobile station that includes a secure element, such as a SIM or a UICC, and is configured to communicate via a cellular communications network. The method comprises the following steps in the administration unit: receiving a request for cellular network subscription data from the mobile station via a WLAN to which the mobile station has attached to by means of a WLAN module implemented in the mobile station; establishing a communication link between the administration unit and the mobile station via the WLAN the mobile station has attached to; and uploading cellular network subscription data from the administration unit via the WLAN to the mobile station such that by means of the cellular network subscription data the mobile station can attach to a corresponding cellular communications network.

According to a third aspect the invention is directed to a mobile station that is configured to communicate via a cellular communications network and that includes a secure element, such as a SIM or a UICC. The mobile station is configured and/or comprises respective means for: attaching to a WLAN by means of a WLAN module implemented in the mobile station; establishing a communication link between the mobile station and an administration unit, preferably an administration server, via the WLAN the mobile station has attached to; and downloading cellular network subscription data from the administration unit via the WLAN to the mobile station and storing the same in the secure element of the mobile station such that by means of the cellular network subscription data the mobile station can attach to a corresponding cellular communications network.

According to a fourth aspect the invention is directed to an administration unit, preferably an administration server, that is configured and/or comprises respective means for: receiving a request for cellular network subscription data from a mobile station via a WLAN to which the mobile station has attached to by means of a WLAN module implemented in the mobile station; establishing a communication link between the administration unit and the mobile station via the WLAN the mobile station has attached to; and uploading cellular network subscription data from the administration unit via the WLAN to the mobile station such that by means of the cellular network subscription data the mobile station can attach to a corresponding cellular communications network.

According to preferred embodiments of the invention, the secure element can be configured to be removably inserted into the mobile station or, alternatively, embedded therein. According to preferred embodiments of the invention, the secure element is implemented as a subscriber identity module (SIM), UICC, USIM, R-UIM or ISIM.

Preferably, the WLAN module is part of the secure element of the mobile station for storing the cellular network subscription data. This embodiment is particularly advantageous, as the cellular network subscription data that is provided by the administration unit via the WLAN and transferred from the WLAN module to the secure element of the mobile station does not leave the secure element, i.e. does not have to pass through potentially insecure components of the mobile station.

According to preferred embodiments of the invention, the WLAN is established by an access point that is configured according to the standard IEEE 802.11 and/or one or more of its sub-standards, such as IEEE 802.11b, 802.11a, 802.11g, 802.111,802.11n, and 802.11ac (such WLANs are also known as WiFi networks). Alternatively, the WLAN could be a wireless LAN operated according to the Bluetooth standard (IEEE 802.15.1) or the WiMAX standard (IEEE 802.16).

The WLAN for establishing a communication link between the mobile station and the administration unit could be a public WLAN or a non-public WLAN requiring WLAN access data to access the non-public WLAN. Such WLAN access data can be pre-stored in the mobile station, preferably in the secure element thereof, and can include a WLAN specific identifier, such as a SSID (Service Set Identifier), as well as any data for identifying and/or authenticating the mobile station relative to the WLAN, such as a user/mobile station identification element, a user password, any secret keys and the like.

Preferably, the mobile station and the administration unit are configured to implement an end-to-end security mechanism ensuring that the cellular network subscription data is transported from the administration unit to the secure element in a safe manner. To this end, at least one shared secret key could be pre-stored in the secure element of the mobile station and the administration unit. Once the administration unit has uniquely identified and authenticated the secure element, this secret key can be used to secure the communication between the administration unit and the secure element. This encryption can be used in addition to any encryption mechanisms provided by an access point to secure the communication over the air interface between the access point and the WLAN module of the mobile station, such as by means of the WEP, WAP or WAP2 protocols.

According to preferred embodiments of the invention, the administration unit is configured such that before uploading cellular network subscription data to the mobile station, the mobile station has to authenticate itself relative to the administration unit. Preferably, the data necessary for authenticating the mobile station relative to the administration unit, such as an identification element, password, secret key or the like, is pre-stored in the secure element of the mobile station, for instance during the manufacturing and/or personalization process thereof.

Preferably, the downloading of cellular network subscription data by the mobile station is triggered by specific events. Such events are preferably monitored by an application that runs on the secure element of the mobile station and is configured to trigger the OTA download of cellular network subscription data to the mobile station. The application can be configured to trigger the OTA download of cellular network subscription data in response to specific events, such as power on of the mobile station, cellular network authentication failure and/ or scheduled timers.

Alternatively or additionally, the application, preferably implemented on the secure element of the mobile station, can be configured to trigger the retrieval of cellular network subscription data in response to the discovery of a specific predefined WLAN by the WLAN module of the mobile station. For instance, it is conceivable that a MNO that operates several WLANs for providing cellular network subscription data to non-personalised secure elements of mobile stations of his subscribers stores the respective WLAN specific identifiers as well as any WLAN access data that is required to attach to one of these WLANs in a respective mobile station such that the application implemented on the secure element of the mobile station can trigger the download of cellular network subscription data, as soon as the mobile station discovers one of the WLANs operated by the MNO. Such WLANs could be installed, for instance, at respective points of sale, where a mobile user can acquire a new mobile station and/or a new secure element.

As the WLAN module of the mobile station preferably communicates with the administration unit via the Internet, in order to correctly address the request for downloading cellular network subscription data an address for locating the administration unit, such as an IP address of the administration unit, can be pre-stored in the secure element of the mobile station.

According to preferred embodiments of the invention, the administration unit, when providing cellular network subscription data to the mobile station, creates an association between these cellular network subscription data and the identity of the user of the mobile station. To this end, the cellular network subscription data, such as an IMSI number and/or a corresponding authentication key Ki, provided to the mobile station can be associated with a unique identification element of the secure element, such as a ICCID, and/ or the mobile station, such as the International Mobile Equipment Identity (IMEI). Alternatively, a unique identification element for identifying the user of the mobile station can be pre-provisioned, preferably, on the secure element thereof.

Preferably, the administration unit is in communication with an authentication unit as part of the PLMN that is used for authenticating the secure element when trying to access the PLMN using the cellular network subscription data provided by the administration unit. In addition to providing the mobile station with cellular network subscription data the administration unit is preferably configured to provide this cellular network subscription data to the authentication unit of the PLMN, preferably along with information about the identity of the user of the mobile station to which the cellular network subscription data has been provided to. For instance, in the context of a cellular communications network configured according to the GSM standard the role of the authentication unit is taken by the Home Location Register (HLR) in combination with the Authentication Center (AUC).

The administration unit can be a dedicated stand-alone unit, e.g. an administration server, or implemented, for instance, in the context of a cellular communications network configured according to the GSM standard implemented as part of a HLR, an AUC or a combination thereof.

According to preferred embodiments of the invention, the administration unit can be configured to provide cellular network subscription data to the mobile station on the basis of information about the location of the mobile station. For instance, the administration unit could be configured to provide cellular network subscription data in form of an IMSI number from a specific range of IMSI numbers to the mobile station on the basis of information about which country the mobile station is located in. This information about the location of the mobile station could be provided, for instance, by a GPS module implemented on the mobile station or derived from information about the WLAN the mobile station uses for communicating with the administration unit.

These and other features, characteristics, advantages, and objects of the invention will be clear from the following detailed description of preferred embodiments, given as a non-restrictive example, under reference to the attached drawings. The person skilled in the art will appreciate, in particular, that the above preferred embodiments can be combined in several ways, which will result in additional advantageous embodiments that are explicitly supported and covered by the present invention. In particular, the person skilled in the art will appreciate that the above described preferred embodiments can be implemented in the context of the first, second, third and fourth aspect of the invention.

### Brief description of the drawings

- Fig. 1: shows a schematic overview of a mobile communications system illustrating different aspects of the present invention; and
- Fig. 2: shows a diagram illustrating a method for providing cellular network subscription data from an administration server to the secure element of a mobile station according to a preferred embodiment of the invention.

### Detailed description of preferred embodiments

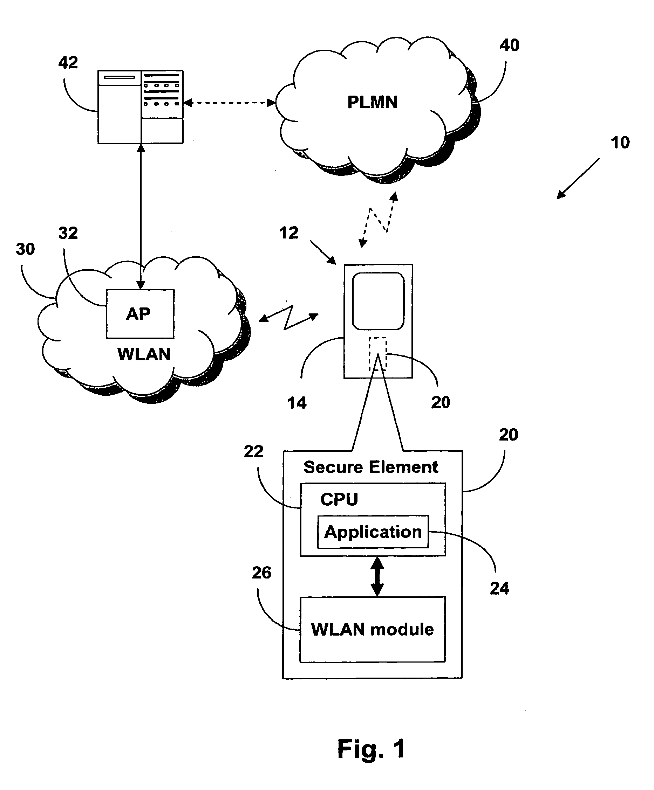

Figure 1 shows schematically the components of a mobile communications system 10 as well as some of the communication channels or links between the components of this system 10 that illustrates different aspects of the present invention.

An exemplary mobile station 12 is shown in figure 1 that consists of a mobile terminal 14 and a secure element 20 for securely storing and processing data that uniquely identifies the user of the mobile station 12. According to preferred embodiments of the invention the secure element 20 is configured as a subscriber identity module (SIM), as the SIM currently is the most popular type of secure element used in cellular communications systems for unique and secure subscriber identification as well as for the provision of different special functions and value-added services. The person skilled in the art will appreciate, however, that other types of secure elements that, depending on the underlying generation and type of cellular communications system standard, are designated as UICC, USIM, R-UIM or ISIM, are also encompassed by the present invention. Moreover, the person skilled in the art will appreciate that the present invention can be advantageously put into practice, for instance, by means of a secure element 20 that can be removably inserted into the mobile terminal 14 or, alternatively, a secure element 20 that is embedded into the mobile terminal 14.

The mobile station 12 is configured to communicate via the air interface (or radio link) with a cellular communications network or Public Land Mobile Network (PLMN) 40, preferably operated by a Mobile Network Operator (MNO) according to the GSM standard. In the following, preferred embodiments of the invention will be described in the context of a cellular communications network according to the standards of the Global System for Mobile communication (GSM), as specified in a number of specifications provided by ETSI. However, the person skilled in the art will appreciate that the present invention may be advantageously applied in connection with other cellular communications systems as well. Such systems include third-generation cellular communications systems (3GPP), such as the Universal Mobile Telecommunications System (UMTS), and next generation or fourth-generation mobile networks (4G), such as Long Term Evolution (LTE), as well as other cellular communications systems, such as CDMA, GPRS (General Packet Radio Service) and CAMEL (Customised Applications for Mobile network Enhanced Logic).

As is well known to the person skilled in the art, the PLMN 40 configured according to the GSM standard generally comprises a base station subsystem consisting of one or more base transceiver stations that define respective cells of the PLMN 40 and are connected to a base station controller. Generally, the base station controller is one of several base station controllers that communicate with a mobile switching center (MSC). Often, a local database called Visitor Location Register (VLR) for keeping track of the mobile users currently located within the cells covered by a MSC (i.e. the MSC service area) is incorporated in the MSC. The MSC provides essentially the same functionality as a central office switch in a public-switched telephone network and is additionally responsible for call processing, mobility management, and radio resource management. The MSC is further in communication with a home location register (HLR), which is the primary database of the PLMN 40 that stores information about its mobile users required for authentication. To this end, the HLR generally is in communication with an authentication center (AUC).

As is known to the person skilled in the art, the communication means between the above described different components of the PLMN 40 may be proprietary or may use open standards. The protocols may be SS7 or IP-based. SS7 is a global standard for telecommunications defined by the International Telecommunication Union (ITU) Telecommunication Standardization Sector (ITU-T). The standard defines the procedures and the protocol by which network elements in the public switched telephone network (PSTN) exchange information over a digital signaling network to effect wireless (cellular) and wired call setup, routing and control. The SS7 network and protocol are used for e.g. basic call setup, management, wireless services, wireless roaming, and mobile subscriber authentication, i.e. enhanced call features providing for efficient and secure worldwide telecommunications. The physical elements by which the elements are grouped or left separate and the interfaces - whether proprietary or open - are left to the MNO, i.e. the operator of the PLMN 40.

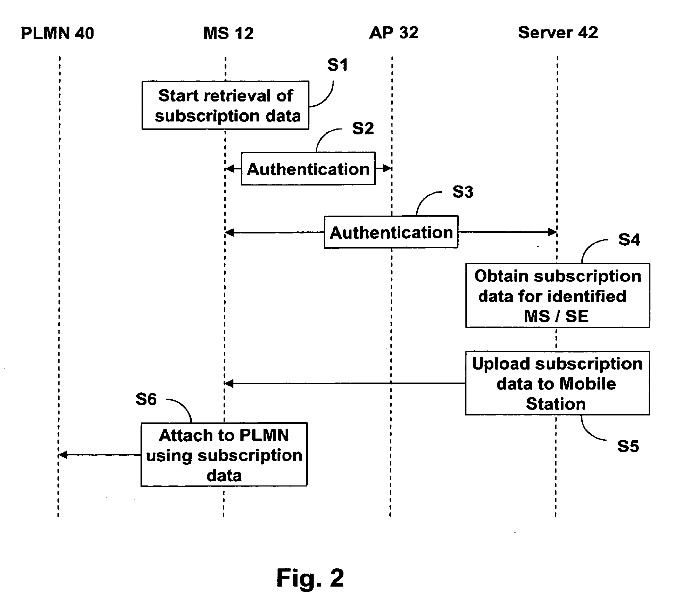

As can be taken from the enlarged view of the secure element 20 in figure 1, the secure element 20 comprises a central processing unit (CPU) 22. The CPU 22 can comprise or be in communication with a memory (not shown) for storing and retrieving data. Preferably, an application 24 is running on the CPU 22 providing for features that will be described in the context of figure 2 in more detail further below. The application 24 could be implemented, for instance, as a Java Applet.

Preferably, the secure element 20 furthermore comprises a WLAN module 26 in communication with the CPU 22 of the secure element 20. The WLAN module 26 is configured to establish a communication link between the secure element 20 and an access point (also called base station) of a WLAN, for instance, the WLAN 30 established by the access point 32. A secure element 20 containing a WLAN module 26 that could be advantageously employed according to the present invention is disclosed in WO 2006/137740. Although not preferred from a security standpoint, it is also conceivable that the WLAN module 26 is not part of the secure element 20, as shown in figure 1, but part of the mobile terminal 14.

Preferably, the WLAN 30 established by the access point 32 is an IEEE 802.11 WLAN, i.e. a WLAN configured according to the standard IEEE 802.11 and/or one or more of its sub-standards, such as IEEE 802.11b, 802.11a, 802.11g, 802.11i, 802.11n, and 802.11ac (such WLANs are also known as WiFi networks). Alternatively, the WLAN 30 could be a wireless LAN operated according to the Bluetooth standard (IEEE 802.15.1) or the WiMAX standard (IEEE 802.16).

As can be taken from figure 1, the access point 32 establishing the WLAN 30 can communicate with an administration server 42, preferably via the Internet. The administration server 42 provides for a backend system and is configured to store cellular network access data allowing the mobile station 12 to access the PLMN 40. To this end, a corresponding cellular network access database could be implemented on the administration server 42 or in communication therewith. Moreover, the administration server 42 is in communication with the PLMN 40. The function of the administration server 42 in combination with the other elements of the mobile communications system 10 shown in figure 1 will now be described under further reference to figure 2.

In step S1 of figure 2, preferably the application 24 running on the CPU 22 of the secure element 20 triggers the retrieval of cellular network subscription data for allowing the mobile station 12 to attach to the PLMN 40 by causing the WLAN module 26, which preferably is part of the secure element 20, to establish a communication link between the mobile station 12 and the access point 32. To this end, WLAN access data for attaching to the access point 32 are stored in the secure element 20. It is conceivable that a list of WLAN access data is stored in the secure element 20, including in particular a WLAN specific identifier, i.e. the "name" of the WLAN, such as the WLAN's SSID (Service Set Identifier), as well as any additional data that is required for identifying and/ or authenticating the mobile station 12 relative to the WLAN, such as a user/ mobile station identification element, a user password, any secret keys and the like. As is known to the person skilled in the art, a shared key authentication protocol between the mobile station 12 and the access point 32 of the WLAN 30 could be implemented as follows. The mobile station 12 requests authentication by the access point 32. The access point 32 responds to the authentication request of the mobile station 12 with a nonce value. The mobile station 12 encrypts the nonce using the secret key that it shares with the access point 32. The access point 32 decrypts the nonce encrypted by the mobile station 12. If the nonce decrypted by the access point 32 matches the nonce value originally sent to the mobile station 12, then the mobile station 12 is authenticated by the access point 32.

By means of the appropriate WLAN access data, preferably stored within the secure element 20, the mobile station 12 can be authenticated by the access point 32 (step S2 of figure 1). The person skilled in the art will appreciate that, for instance, in the case, where WLAN 30 is a public WLAN, the authentication step S2 might not be necessary.

Once the communication link between the mobile station 12 and the access point 32 is established, i.e. once the mobile station 12 has attached to the access point 32 in step S2 of figure 2, the mobile station 12 can establish a communication link with the administration server 42. As the mobile station 12 communicates with the administration server 42 via the Internet, in order to establish a communication link and to correctly address a request for downloading cellular network subscription data an address for locating the administration server 42 on the Internet, such as the IP address of the administration server 42, is preferably pre-stored in the secure element 20 of the mobile station 12.

Preferably, the administration server 42 is configured such that before uploading cellular network subscription data to the mobile station 12, the mobile station 12 has to authenticate itself relative to the administration server 42 (see step S3 of figure 2). Also in this case, the data necessary for authenticating the mobile station 12 relative to the administration server 42, such as an identification element, password, secret key or the like, is preferably pre-stored in the secure element 20 of the mobile station 12, for instance during the manufacturing and/or personalization process thereof. For authenticating the mobile station 12 by the administration server 42 a challenge-response protocol could be used similar to the one described above in the context of an authentication of the mobile station 12 by the access point 32. After the mobile station 12 (or rather its secure element 20) has been successfully authenticated by the administration server 42 in step S3 of figure 2, the administration server 42 will compile cellular network subscription data that will allow the mobile station 12 to attach to and communication with the PLMN 40 (step S4 of figure 2). In the preferred case, where the PLMN 40 is a cellular communications network according to the GSM standard, these cellular network subscription data could include, for instance, an IMSI number and/or an authentication key Ki. Alternatively or additionally, the cellular network subscription data compiled by the administration server can comprise a pointer to a specific set of cellular network subscription data from a list of cellular network subscription data that is pre-stored, preferably in the secure element 20 of the mobile station 12.

While or after compiling appropriate cellular network subscription data for the mobile station 12 in response to its request for cellular network subscription data (step S4 of figure 2) and uploading the complied cellular network subscription data to the mobile station 12 (step S5 of figure 2), the administration server 42 preferably creates an association between these cellular network subscription data and the identity of the user and/ or the secure element 20 of the mobile station 12 (not shown in figure 2). For instance, the cellular network subscription data, such as an IMSI number and/or a corresponding authentication key Ki, to be provided to the mobile station 12 can be associated with a unique identification element of the secure element 20, such as a ICCID, and/or the mobile station 12, such as the International Mobile Equipment Identity (IMEI). Alternatively, a unique identification element for identifying the user of the mobile station 12 can be pre-provisioned, preferably, on the secure element 20 thereof.

Preferably, the administration server 42 is in communication with an authentication unit of the PLMN 40 that is used for authenticating the mobile station 12 (or more specifically its secure element 20) when trying to access the PLMN 40 using the cellular network subscription data provided by the administration server 42. In addition to providing the mobile station 12 with cellular network subscription data the administration server 42 is preferably configured to provide this cellular network subscription data to the authentication unit of the PLMN 40. Moreover, the administration server 42 is, preferably, configured to inform the authentication unit of the PLMN 40 about the association between the cellular network subscription data and the identity of the user and/ or the secure element 20 of the mobile station 12 so that the authentication unit of the PLMN 40 can associate the cellular network subscription data with a mobile user/ station identity. For instance, in the context of the PLMN 40 being configured according to the GSM standard the role of the authentication unit is taken by the Home Location Register (HLR) in combination with the Authentication Center (AUC). In this context the administration unit according to the present invention can be implemented as part of the HLR, the AUC or a combination thereof of the PLMN 40.

Preferably, the mobile station 12 and the administration server 42 are configured to implement an end-to-end security mechanism ensuring that the cellular network subscription data is downloaded from the administration server 42 to the mobile station 12 (and more specifically its secure element 20) in a safe manner in step S5 of figure 2. To this end, at least one shared secret key could be pre-stored in the secure element 20 of the mobile station 12 and the administration server. Once the administration server 42 has uniquely identified and authenticated the mobile station 12 and its secure element 20, this secret key can be used for encrypting and decrypting the communication between the administration server 42 and the mobile station 12. This encryption can be used in addition to any encryption mechanisms provided by the access point 32 to secure the communication over the air interface between the access point 32 and the WLAN module 26 of the mobile station 12, such as by means of the WEP, WAP or WAP2 protocols.

Once the mobile station 12 has downloaded the cellular network subscription data from the administration server 42 in step S5 of figure 2 and stored the same within its secure element 20, the mobile station 12 is ready to attach to the PLMN 40 via a cellular communication interface of the mobile station 12 using the cellular network subscription data provided by the administration server 42 (step S6 of figure 2).

Preferably, the application 24 running on the CPU 22 of the secure element 20 of the mobile station 12 controls and coordinates the steps described in the context of figure 2 that require an action of the mobile station, such as steps S1 to S3 and steps S5, S6.

According to preferred embodiments of the invention, the administration server can be configured to provide the cellular network subscription data to the mobile station 12 on the basis of information about the location of the mobile station 12. For instance, the administration server 42 could be configured to provide cellular network subscription data in form of an IMSI number from a specific range of IMSI numbers to the mobile station 12 on the basis of information about which country the mobile station 12 is located in. This information about the location of the mobile station 12 could be provided, for instance, in step S3 of figure 2 by a GPS module implemented on the mobile station 12 or derived from information about the WLAN the mobile station 12 uses for communicating with the administration server 42. The present invention has been described in the context of some advantageous embodiments implemented in the context of a GSM network. However, this is not to be understood to restrict the invention to the details of these embodiments, which are presented for illustrative purposes only, as the general idea of the present invention could equally be implemented in the context of cellular communications systems other than GSM. The person skilled in the art will appreciate that that present invention can be applied to any type of mobile station configured to communicate via a cellular communications network and a WLAN. For instance, in the sense of the present invention a mobile station could be a car equipped with a secure element for communicating via a cellular communications network and a WLAN. Moreover, in light of the above detailed description the person skilled in the art will appreciate that modifications and/ or additions can be made to the methods and devices as described heretofore, which are to be considered to remain within the scope of the present invention as defined by the appended claims.

## Claims

1. Method for providing cellular network subscription data from an administration unit (42), preferably an administration server, to a mobile station (12) that includes a secure element (20), such as a SIM or a UICC, and is configured to communicate via a cellular communications network (40), wherein the method comprises the following steps in the mobile station (12):
attaching to a WLAN (30) by means of a WLAN module (26) implemented in the mobile station (12);
establishing a communication link between the mobile station (12) and the administration unit (42) via the WLAN (30) the mobile station (12) has attached to; and
downloading cellular network subscription data from the administration unit (42) via the WLAN (30) to the mobile station (12) and storing the same within the secure element (20) of the mobile station (12) such that by means of the cellular network subscription data the mobile station (12) can attach to a corresponding cellular communications network (40),
**characterized in that** the step of downloading cellular network subscription data is triggered by an application running on the secure element (20) in response to the discovery of a specific predefined WLAN by the WLAN module (26).

2. Method for providing cellular network subscription data from an administration unit (42), preferably an administration server, to a mobile station (12) that includes a secure element (20), such as a SIM or a UICC, and is configured to communicate via a cellular communications network (40), wherein the method comprises the following steps in the administration unit (42):
receiving a request for cellular network subscription data from the mobile station (12) via a WLAN (30) to which the mobile station (12) has attached to by means of a WLAN module (26) implemented in the mobile station (12);
establishing a communication link between the administration unit (42) and the mobile station (12) via the WLAN (30) the mobile station (12) has attached to; and
uploading cellular network subscription data from the administration unit (42) via the WLAN (30) to the mobile station (12) such that by means of the cellular network subscription data the mobile station (12) can attach to a corresponding cellular communications network (40),
**characterized in that** the step of uploading cellular network subscription data is triggered by an application running on the secure element (20) in response to the discovery of a specific predefined WLAN by the WLAN module (26).

3. The method of claim 1 or claim 2, wherein the secure element (20) is configured to be removably inserted into the mobile station (12) or, alternatively, is embedded therein and wherein, preferably, the secure element (20) is implemented as a subscriber identity module SIM, UICC, USIM, R-UIM or ISIM.

4. The method of claim 3, wherein the WLAN module (26) is part of the secure element (20) of the mobile station (12) for securely storing the cellular network subscription data.

5. The method of claim 1 or claim 2, wherein the mobile station (12) is configured to access a WLAN (30) established by an access point (32) that is configured according to the standard IEEE 802.11 and/or one or more of its sub-standards, such as IEEE 802.11b, 802.11a, 802.11g, 802.11i, 802.11n, and 802.11ac, the Bluetooth standard IEEE 802.15.1 or the WiMAX standard IEEE 802.16.

6. The method of claim 1 or claim 2, wherein the WLAN (30) is a non-public WLAN (30) requiring WLAN access data to access the same and wherein such WLAN access data are be pre-stored in the mobile station (12), preferably in the secure element (20) thereof, and, preferably, include a WLAN specific identifier, such as a SSID Service Set Identifier, as well as any data for identifying and/ or authenticating the mobile station (12) relative to the WLAN (30), such as a user/mobile station identification element, a user password, any secret keys and the like.

7. The method of claim 1 or claim 2, wherein at least one shared secret key is used by the secure element (20) of the mobile station (12) and the administration unit (42) to encrypt and decrypt the communication between the administration unit (42) and the secure element (20).

8. The method of claim 1 or claim 2, wherein the administration unit (42) is configured such that before uploading cellular network subscription data to the mobile station (12), the mobile station (12) has to authenticate itself relative to the administration unit (42).

9. The method of claim 1 or claim 2, wherein the application (24) is implemented on the secure element (20) to monitor further specific events that trigger downloading of cellular network subscription data by the mobile station (12), such as power on of the mobile station (12) and/or failure to attach to the cellular communications network (40).

10. The method of claim 1 or claim 2, wherein an address, such an IP address, of the administration unit (42) is stored on the mobile station (12), and preferably on its secure element (20), that allows the mobile station (12) to address the request for downloading cellular network subscription data to the administration unit (42).

11. The method of claim 1 or claim 2, wherein the administration unit (42) is, furthermore, configured to create an association between the cellular network subscription data and an identity of the user of the mobile station, preferably when providing cellular network subscription data to the mobile station.

12. The method of claim 1 or claim 2, wherein the administration unit (42) is, furthermore, configured to provide the cellular network subscription data to an authentication unit of the cellular communications network (40) that is used for authenticating the secure element (20) when trying to access the cellular communications network (40) using the cellular network subscription data provided by the administration unit (42).

13. The method of claim 1 or claim 2, wherein the administration unit (42), furthermore, is configured to provide cellular network subscription data to the mobile station (12) on the basis of information about the location of the mobile station (12).

14. A mobile station (12) that is configured to communicate via a cellular communications network (40) and that includes a secure element (20), such as a SIM or a UICC, wherein the mobile station (12) is configured and/ or comprises respective means for:
attaching to a WLAN (30) by means of a WLAN module (26) implemented in the mobile station (12);
establishing a communication link between the mobile station (12) and an administration unit (42), preferably an administration server, via the WLAN (30) the mobile station (12) has attached to; and
downloading cellular network subscription data from the administration unit (42) via the WLAN (30) to the mobile station (12) and storing the same in the secure element (20) of the mobile station (12) such that by means of the cellular network subscription data the mobile station (12) can attach to a corresponding cellular communications network (40),
**characterized in that** the step of downloading cellular network subscription data is triggered by an application running on the secure element (20) in response to the discovery of a specific predefined WLAN by the WLAN module (26).

15. An administration unit (42), preferably an administration server, that is configured and/or comprises respective means for:
receiving a request for cellular network subscription data from a mobile station (12) that includes a secure element (20), such as a SIM or a VICC, via a WLAN (30) to which the mobile station (12) has attached to by means of a WLAN module (26) implemented in the mobile station (12);
establishing a communication link between the administration unit (42) and the mobile station (12) via the WLAN (30) the mobile station (12) has attached to; and
uploading cellular network subscription data from the administration unit (42) via the WLAN (30) to the mobile station (12) such that by means of the cellular network subscription data the mobile station (12) can attach to a corresponding cellular communications network (40),
**characterized in that** the step of uploading cellular network subscription data is triggered by an application running on the secure element (20) in response to the discovery of a specific predefined WLAN by the WLAN module (26).

## Patentansprüche

1. Verfahren zum Bereitstellen von Mobilfunknetzwerk-Subskriptionsdaten von einer Administrationseinheit (42), vorzugsweise einem Administrationsserver, an eine Mobilstation (12), welche ein Sicherheitselement (20) umfasst, wie z.B. eine SIM oder eine UICC, und welche eingerichtet ist, über ein Mobilfunkkommunikationsnetzwerk (40) zu kommunizieren, wobei das Verfahren die folgenden Schritte in der Mobilstation (12) umfasst:
Anbinden an ein WLAN (30) mittels eines WLAN-Moduls (26), welches in der Mobilstation (12) implementiert ist;
Herstellen einer Kommunikationsverbindung zwischen der Mobilstation (12) und der Administrationseinheit (42) über das WLAN (30), an welches sich die Mobilstation (12) angebunden hat; und
Herunterladen von Mobilfunknetzwerk-Subskriptionsdaten von der Administrationseinheit (42) über das WLAN (30) auf die Mobilstation (12) und Speichern derselben in dem Sicherheitselement (20) der Basisstation (12), so dass sich die Mobilstation (12) mittels der Mobilfunknetzwerk-Subskriptionsdaten an ein entsprechendes Mobilfunkkommunikationsnetzwerk (40) anbinden kann,
**dadurch gekennzeichnet, dass** der Schritt des Herunterladens der Mobilfunknetzwerk-Subskriptionsdaten von einer Applikation ausgelöst wird, welche auf dem Sicherheitselement (20) ausgeführt wird, in Antwort auf das Auffinden eines spezifischen vorbestimmten WLAN durch das WLAN-Modul (26).

2. Verfahren zum Bereitstellen von Mobilfunknetzwerk-Subskriptionsdaten von einer Administrationseinheit (42), vorzugsweise einem Administrationsserver, an eine Mobilstation (12), welche ein Sicherheitselement (20) umfasst, wie z.B. eine SIM oder eine UICC, und welche eingerichtet ist, über ein Mobilfunkkommunikationsnetzwerk (40) zu kommunizieren, wobei das Verfahren die folgenden Schritte in der Administrationseinheit (42) umfasst:
Empfangen einer Anfrage nach Mobilfunknetzwerk-Subskriptionsdaten von der Mobilstation (12) über ein WLAN (30), an welches sich die Mobilstation (12) mittels eines WLAN-Moduls (26) angebunden hat, welches in der Mobilstation (12) implementiert ist;
Herstellen einer Kommunikationsverbindung zwischen der Administrationseinheit (42) und der Mobilstation (12) über das WLAN (30), an welches sich die Mobilstation (12) angebunden hat; und
Hochladen von Mobilfunknetzwerk-Subskriptionsdaten von der Administrationseinheit (42) über das WLAN (30) zu der Mobilstation (12), so dass sich die Mobilstation (12) mittels der Mobilfunknetzwerk-Subskriptionsdaten an ein entsprechendes Mobilfunkkommunikationsnetzwerk (40) anbinden kann,
**dadurch gekennzeichnet, dass** der Schritt des Hochladens der Mobilfunknetzwerk-Subskriptionsdaten von einer Applikation ausgelöst wird, welche auf dem Sicherheitselement (20) ausgeführt wird, in Antwort auf das Auffinden eines spezifischen vorbestimmten WLAN durch das WLAN-Modul (26).

3. Verfahren nach Anspruch 1 oder 2, wobei das Sicherheitselement (20) eingerichtet ist, entfernbar in die Mobilstation (12) eingesetzt zu werden, oder, alternativ, in die Mobilstation eingebettet ist, und wobei, vorzugsweise, das Sicherheitselement (20) als Teilnehmerkennungsmodul SIM, UICC, USIM, R-UIM oder ISIM implementiert ist.

4. Verfahren nach Anspruch 3, wobei das WLAN-Modul (26) Teil des Sicherheitselementes (20) der Mobilstation (12) zum sicheren Speichern der Mobilfunknetzwerk-Subskriptionsdaten ist.

5. Verfahren nach Anspruch 1 oder 2, wobei die Mobilstation (12) eingerichtet ist, auf ein WLAN (30) zuzugreifen, welches durch einen Zugangspunkt (32) errichtet ist, welcher gemäß dem Standard IEEE 802.11 und/oder einem oder mehreren dessen Unterstandards eingerichtet ist, wie z.B. IEEE 802.11b, 802.11a, 802.11g, 802.11i, 802.11n und 802.11ac, dem Bluetooth-Standard IEEE 802.15.1 oder dem WiMAX-Standard IEEE 802.16.

6. Verfahren nach Anspruch 1 oder 2, wobei das WLAN (30) ein nicht öffentliches WLAN (30) ist, welches WLAN-Zugangsdaten erfordert, um darauf zuzugreifen, und wobei solche WLAN-Zugangsdaten in der Mobilstation (12) vorgespeichert sind, vorzugsweise in dem Sicherheitselement (20) der Mobilstation, und, vorzugsweise, einen WLAN-spezifischen Bezeichner umfassen, wie z.B. einen SSID Service Set Identifier, sowie beliebige Daten zum Bezeichnen und/oder Authentisieren der Mobilstation (12) gegenüber dem WLAN (30), wie z.B. ein Benutzer/Mobilstation-Identifikationselement, ein Benutzer-Passwort, beliebige geheime Schlüssel und dergleichen.

7. Verfahren nach Anspruch 1 oder 2, wobei zumindest ein gemeinsamer geheime Schlüssel von dem Sicherheitselement (20) der Mobilstation (12) und der Administrationseinheit (42) verwendet wird, um die Kommunikation zwischen der Administrationseinheit (42) und dem Sicherheitselement (20) zu verschlüsseln und zu entschlüsseln.

8. Verfahren nach Anspruch 1 oder 2, wobei die Administrationseinheit (20) derart eingerichtet ist, dass sich die Mobilstation (12) vor dem Hochladen von Mobilfunknetzwerk-Subskriptionsdaten zu der Mobilstation (12) gegenüber der Administrationseinheit (42) authentisieren muss.

9. Verfahren nach Anspruch 1 oder 2, wobei die Applikation (24) auf dem Sicherheitselement (20) implementiert ist, um weitere spezifische Ereignisse zu überwachen, welche ein Herunterladen von Mobilfunknetzwerk-Subskriptionsdaten durch die Mobilstation (12) auslösen, wie z.B. ein Anschalten der Mobilstation (12) und/oder ein Fehlschlagen eines Anbindens an das Mobilfunkkommunikationsnetzwerk (40).

10. Verfahren nach Anspruch 1 oder 2, wobei eine Adresse, wie z.B. eine IP-Adresse, der Administrationseinheit (42) in der Mobilstation (12) gespeichert ist, und vorzugsweise auf dem Sicherheitselement (20) der Mobilstation, welche es der Mobilstation (12) ermöglicht, die Anfrage zum Herunterladen von Mobilfunknetzwerk-Subskriptionsdaten an die Administrationseinheit (42) zu richten.

11. Verfahren nach Anspruch 1 oder 2, wobei die Administrationseinheit (42) weiterhin eingerichtet ist, eine Verbindung zwischen den Mobilfunknetzwerk-Subskriptionsdaten und einer Identität des Nutzers der Mobilstation herzustellen, vorzugsweise beim Bereitstellen von Mobilfunknetzwerk-Subskriptionsdaten an die Mobilstation.

12. Verfahren nach Anspruch 1 oder 2, wobei die Administrationseinheit (42) weiterhin eingerichtet ist, die Mobilfunknetzwerk-Subskriptionsdaten an eine Authentifizierungseinheit des Mobilfunkkommunikationsnetzwerk (40) bereitzustellen, welche zum Authentifizieren des Sicherheitselementes (20) verwendet wird bei einem Versuch, auf das Mobilfunkkommunikationsnetzwerk (40) zuzugreifen unter Verwendung der Mobilfunknetzwerk-Subskriptionsdaten, welche durch die Administrationseinheit (42) bereitgestellt werden.

13. Verfahren nach Anspruch 1 oder 2, wobei die Administrationseinheit (42) weiterhin eingerichtet ist, Mobilfunknetzwerk-Subskriptionsdaten an die Mobilstation (12) auf der Basis von Informationen über den Standort der Mobilstation (12) bereitzustellen.

14. Mobilstation (12), die eingerichtet ist, über einen Mobilfunkkommunikationsnetzwerk (40) zu kommunizieren, und die ein Sicherheitselement (20) umfasst, wie z.B. eine SIM oder eine UICC, wobei die Mobilstation (12) eingerichtet ist und/oder entsprechende Einrichtungen umfasst zum:
Anbinden an ein WLAN (30) mittels eines WLAN-Moduls (26), welches in der Mobilstation (12) implementiert ist;
Herstellen einer Kommunikationsverbindung zwischen der Mobilstation (12) und der Administrationseinheit (42), vorzugsweise einem Administrationsserver, über das WLAN (30), an welches sich die Mobilstation (12) angebunden hat; und
Herunterladen von Mobilfunknetzwerk-Subskriptionsdaten von der Administrationseinheit (42) über das WLAN (30) auf die Mobilstation (12) und Speichern derselben in dem Sicherheitselement (20) der Basisstation (12), so dass sich die Mobilstation (12) mittels der Mobilfunknetzwerk-Subskriptionsdaten an ein entsprechendes Mobilfunkkommunikationsnetzwerk (40) anbinden kann,
**dadurch gekennzeichnet, dass** der Schritt des Herunterladens der Mobilfunknetzwerk-Subskriptionsdaten von einer Applikation ausgelöst wird, welche auf dem Sicherheitselement (20) ausgeführt wird, in Antwort auf das Auffinden eines spezifischen vorbestimmten WLAN durch das WLAN-Modul (26).

15. Administrationseinheit (42), vorzugsweise ein Administration-Server, der eingerichtet ist und/oder Einrichtungen umfasst zum:
Empfangen einer Anfrage nach Mobilfunknetzwerk-Subskriptionsdaten von der Mobilstation (12), welche ein Sicherheitselement (20) umfasst, wie z.B. eine SIM oder eine UICC, über ein WLAN (30), an welches sich die Mobilstation (12) mittels eines WLAN-Moduls (26) angebunden hat, welches in der Mobilstation (12) implementiert ist;
Herstellen einer Kommunikationsverbindung zwischen der Administrationseinheit (42) und der Mobilstation (12) über das WLAN (30), an welches sich die Mobilstation (12) angebunden hat; und
Hochladen von Mobilfunknetzwerk-Subskriptionsdaten von der Administrationseinheit (42) über das WLAN (30) zu der Mobilstation (12), so dass sich die Mobilstation (12) mittels sich der Mobilfunknetzwerk-Subskriptionsdaten an ein entsprechendes Mobilfunkkommunikationsnetzwerk (40) anbinden kann,
**dadurch gekennzeichnet, dass** der Schritt des Hochladens der Mobilfunknetzwerk-Subskriptionsdaten von einer Applikation ausgelöst wird, welche auf dem Sicherheitselement (20) ausgeführt wird, in Antwort auf das Auffinden eines spezifischen vorbestimmten WLAN durch das WLAN-Modul (26).

## Revendications

1. Procédé destiné à fournir des données d'abonnement de réseau cellulaire émanant d'une unité d'administration (42), de préférence un serveur d'administration, à une station mobile (12) qui inclut un élément de sécurisation (20), tel qu'un SIM ou un UICC, et est configurée pour communiquer via un réseau de télécommunications cellulaire (40), dans lequel le procédé comprend les étapes suivantes dans la station mobile (12) :
rattacher à un WLAN (30) au moyen d'un module WLAN (26) mis en oeuvre dans la station mobile (12) ;
établir une liaison de communication entre la station mobile (12) et l'unité d'administration (42) via le WLAN (30) auquel la station mobile (12) s'est rattachée ;
télécharger des données d'abonnement de réseau cellulaire émanant de l'unité d'administration (42) via le WLAN (30) vers la station mobile (12), et stocker celles-ci à l'intérieur de l'élément de sécurisation (20) de la station mobile (12), de telle sorte qu'au moyen des données d'abonnement de réseau cellulaire, la station mobile (12) peut se rattacher à un réseau de télécommunications cellulaire correspondant (40),
**caractérisé en ce que** l'étape de téléchargement des données d'abonnement de réseau cellulaire est déclenchée par une application fonctionnant sur l'élément de sécurisation (20) en réaction à la découverte d'un WLAN prédéfini spécifique par le module WLAN (26).

2. Procédé destiné à fournir des données d'abonnement de réseau cellulaire émanant d'une unité d'administration (42), de préférence un serveur d'administration, à une station mobile (12) qui inclut un élément de sécurisation (20), tel qu'un SIM ou un UICC, et est configurée pour communiquer via un réseau de télécommunications cellulaire (40), dans lequel le procédé comprend les étapes suivantes dans l'unité d'administration (42) :
recevoir une demande pour les données d'abonnement de réseau cellulaire émanant de la station mobile (12) via un WLAN (30) auquel la station mobile (12) s'est rattachée au moyen d'un module WLAN (26) mis en oeuvre dans la station mobile (12) ;
établir une liaison de communication entre l'unité d'administration (42) et la station mobile (12) via le WLAN (30) auquel la station mobile (12) s'est rattachée, et
téléverser des données d'abonnement de réseau cellulaire émanant de l'unité d'administration (42) via le WLAN (30) vers la station mobile (12), de telle sorte qu'au moyen des données d'abonnement de réseau cellulaire, la station mobile (12) peut se rattacher à un réseau de télécommunications cellulaire correspondant (40),
**caractérisé en ce que** l'étape de téléversement des données d'abonnement de réseau cellulaire est déclenchée par une application fonctionnant sur l'élément de sécurisation (20) en réaction à la découverte d'un WLAN prédéfini spécifique par le module WLAN (26).

3. Procédé selon la revendication 1 ou 2, dans lequel l'élément de sécurisation (20) est configuré pour être introduit de manière amovible dans la station mobile (12), ou en variante, est intégré à l'intérieur de celle-ci, et dans lequel l'élément de sécurisation (20) est de préférence mis en oeuvre sous la forme d'un module d'identification d'abonné SIM, UICC, USIM, R-UIM ou ISIM.

4. Procédé selon la revendication 3, dans lequel le module WLAN (26) fait partie de l'élément de sécurisation (20) de la station mobile (12) en vue de stocker de manière sécurisée les données d'abonnement de réseau cellulaire.

5. Procédé selon la revendication 1 ou 2, dans lequel la station mobile (12) est configurée pour accéder à un WLAN (30) établi par un point d'accès (32) qui est configuré suivant la norme IEEE 802.11 et/ou une ou plusieurs de ses normes connexes, telles que IEEE 802.11b, IEEE 802.11 a, 802.11g, 802.11 i, 802.11n et 802.11ac, la norme Bluetooth IEEE 802.15.1 ou la norme WiMAX IEEE 802.16.

6. Procédé selon la revendication 1 ou 2, dans lequel le WLAN (30) est un WLAN non public (30) nécessitant des données d'accès WLAN pour accéder à celui-ci, et dans lequel de telles données d'accès WLAN sont stockées au préalable dans la station mobile (12), de préférence dans l'élément de sécurisation (20) de celle-ci, et inclut de préférence un identificateur spécifique WLAN, tel qu'un identifiant de réseau sans fil SSID ainsi que toutes données destinées à identifier et/ou authentifier la station mobile (12) par rapport au WLAN (30), telles qu'un élément d'identification d'utilisateur/station mobile, un mot de passe utilisateur, des clés secrètes quelconques et éléments similaires.

7. Procédé selon la revendication 1 ou 2, dans lequel au moins une clé secrète partagée est utilisée par l'élément de sécurisation (20) de la station mobile (12) et l'unité d'administration (42) afin de chiffrer et déchiffrer la communication entre l'unité d'administration (42) et l'élément de sécurisation (20).

8. Procédé selon la revendication 1 ou 2, dans lequel l'unité d'administration (42) est configurée de telle sorte que préalablement au téléversement des données d'abonnement de réseau cellulaire vers la station mobile (12), la station mobile (12) doit s'authentifier auprès de l'unité d'administration (42).

9. Procédé selon la revendication 1 ou 2, dans lequel l'application (24) est mise en oeuvre sur l'élément de sécurisation (20) afin de surveiller d'autres événements spécifiques qui déclenchent le téléchargement de données d'abonnement de réseau cellulaire par la station mobile (12), tels que la mise sous tension de la station mobile (12) et/ou l'échec du rattachement au réseau de télécommunications cellulaire (40).

10. Procédé selon la revendication 1 ou 2, dans lequel une adresse, telle qu'une adresse IP de l'unité d'administration (42), est stockée sur la station mobile (12), et de préférence sur son élément de sécurisation (20), ce qui permet à la station mobile (12) de traiter la demande pour le téléchargement de données d'abonnement de réseau cellulaire vers l'unité d'administration (42).

11. Procédé selon la revendication 1 ou 2, dans lequel l'unité d'administration (42) est en outre configurée pour créer une association entre les données d'abonnement de réseau cellulaire et une identité de l'utilisateur de la station mobile, de préférence lors de la fourniture de données d'abonnement de réseau cellulaire à la station mobile.

12. Procédé selon la revendication 1 ou 2, dans lequel l'unité d'administration (42) est en outre configurée pour fournir les données d'abonnement de réseau cellulaire à une unité d'authentification du réseau de télécommunications cellulaire (40) qui est utilisée pour authentifier l'élément de sécurisation (20) lors d'une tentative d'accès au réseau de télécommunications cellulaire (40) à l'aide des données d'abonnement de réseau cellulaire fournies par l'unité d'administration (42).

13. Procédé selon la revendication 1 ou 2, dans lequel l'unité d'administration (42) est en outre configurée pour fournir des données d'abonnement de réseau cellulaire à la station mobile (12) sur la base d'informations concernant l'emplacement de la station mobile (12).

14. Station mobile (12) qui est configurée pour communiquer via un réseau de télécommunications cellulaire (40) et qui inclut un élément de sécurisation (20), tel qu'un SIM ou un UICC, dans laquelle la station mobile (12) est configurée et/ou comprend des moyens respectifs pour :
rattacher à un WLAN (30) au moyen d'un module WLAN (26) mis en oeuvre dans la station mobile (12) ;
établir une liaison de communication entre la station mobile (12) et l'unité d'administration (42), de préférence un serveur d'administration, via le WLAN (30) auquel la station mobile (12) s'est rattachée ;
télécharger des données d'abonnement de réseau cellulaire émanant de l'unité d'administration (42) via le WLAN (30) vers la station mobile (12), et stocker celles-ci dans l'élément de sécurisation (20) de la station mobile (12), de telle sorte qu'au moyen des données d'abonnement de réseau cellulaire, la station mobile (12) peut se rattacher à un réseau de télécommunications cellulaire correspondant (40),
**caractérisée en ce que** l'étape de téléchargement de données d'abonnement de réseau cellulaire est déclenchée par une application fonctionnant sur l'élément de sécurisation (20) en réaction à la découverte d'un WLAN prédéfini spécifique par le module WLAN (26).

15. Unité d'administration (42), de préférence un serveur d'administration, qui est configurée et/ou comprend des moyens respectifs pour :
recevoir une demande pour les données d'abonnement de réseau cellulaire émanant d'une station mobile (12) qui inclut un élément de sécurisation (20), tel qu'un SIM ou un UICC, via un WLAN (30) auquel la station mobile (12) s'est rattachée au moyen d'un module WLAN (26) mis en oeuvre dans la station mobile (12) ;
établir une liaison de communication entre l'unité d'administration (42) et la station mobile (12) via le WLAN (30) auquel la station mobile (12) s'est rattachée, et
téléverser des données d'abonnement de réseau cellulaire émanant de l'unité d'administration (42) via le WLAN (30) vers la station mobile (12), de telle sorte qu'au moyen des données d'abonnement de réseau cellulaire, la station mobile (12) peut se rattacher à un réseau de télécommunications cellulaire correspondant (40),
**caractérisée en ce que** l'étape de téléversement des données d'abonnement de réseau cellulaire est déclenchée par une application fonctionnant sur l'élément de sécurisation (20) en réaction à la découverte d'un WLAN prédéfini spécifique par le module WLAN (26).
